# EUROPÄISCHE PATENTANMELDUNG

(11) **EP 2 672 160 A2**
(43) Veröffentlichungstag der Anmeldung: **11.12.2013**
(21) Anmeldenummer: 13170384.5
(22) Anmeldetag: 04.06.2013
(51) Int. Cl.: F16L 37/084, F16L 37/138

(54) **Kupplungsvorrichtung**

(30) Priorität: 08.06.2012 DE 102012011282
(71) Anmelder: Winfried Keine Metallverarbeitung GES.MBH, 57413 Finnentrop (DE)
(72) Erfinder: Keine, Winfried, 57413 Finnentrop (DE); Keine, Frank, 57413 Finnentrop (DE)
(74) Vertreter: Grosse, Wolf-Dietrich Rüdiger

(57) **Zusammenfassung**

Eine Kupplungsvorrichtung (1), bestehend aus einem Verbindungsstutzen (2), einer diesen aufnehmenden Muffe (3) sowie einem zwischen Verbindungsstutzen (2) und Muffe (3) wirkenden Verbindungselement zur lösbaren Verbindung mindestens einer Druckleitung, insbesondere Höchstdruckleitung mit einem Anschluss, soll so weitergebildet werden, dass diese problemlos höchsten Drücken, auch bei rauem Betrieb standhält und dennoch leicht und vorzugsweise ohne Werkzeug zu verbinden bzw. zu lösen ist. Dazu wird vorgeschlagen, dass dem Verbindungsstutzen (2) ein fester Anschlag (10) zugeordnet ist, dass auf dem Verbindungsstutzen (2) eine verschiebebewegliche Verriegelungshülse (12) angeordnet ist, dass zwischen Anschlag (10) und Verriegelungshülse (12) als Verbindungselement mindestens ein gezielt mechanisch antreibbares Rastelement (8) vorgesehen ist, welches mit dem Anschlag (10) und der Verriegelungshülse (12) zusammenwirkt, dass bei in der Muffe (3) eingeschobenem Verbindungsstutzen (2) das Rastelement (8) des Verbindungsstutzens (2) einer Innenausnehmung (7) der Muffe (3) gegenübersteht, und dass das Rastelement (8) durch Verschiebebewegung zwischen Verriegelungshülse (12) und Anschlag (10) aufeinander zu in die Innenausnehmung (7) der Muffe (3) einrastbar ist. (Fig. 1)

## Beschreibung

Die Erfindung betrifft eine Kupplungsvorrichtung bestehend aus einem Verbindungsstutzen, einer diesen aufnehmende Muffe sowie einem zwischen Verbindungsstutzen und Muffe wirkenden Verbindungselement zum lösbaren Verbinden von mindestens einer Druckleitung, insbesondere Höchstdruckleitung, mit einem Anschluss.

Derartige Kupplungsvorrichtungen sind z. B. durch die DE 1 204 894 B bzw. die DE 38 72 974 T2 bekannt geworden. Bei diesen Verbindungsvorrichtungen wird der Verbindungsstutzen mit der Muffe durch einen als Verbindungselement wirkenden U-förmigen Bügel verriegelt. Schenkel der U-förmigen Bügel werden dabei in im Querschnitt kreisrunde Bohrungen der Muffe gesteckt und greifen beiderseits tangential in eine im Querschnitt rechteckige Ringnut des Verbindungsstutzen ein. Der U-förmige Bügel bzw. die Sicherungsklammer wird dabei auf Scherung beansprucht, wobei die Sicherungsklammer im Bereich der Bohrung der Muffe die Scherkräfte nur über eine linienförmige Berührungsfläche der Sicherungsklammer mit der Bohrung der Muffe und im Bereich der rechteckigen Ringnut nur über einen sehr kleinen Flächenbereich der Sicherungsklammer aufnehmen kann.

Bei den immer höher werdenden zu verarbeitenden Drücken sind diesen Sicherungsklammem Grenzen gesetzt. Hinzu kommt, dass ein Einbringen der Sicherungsklammer in die Muffe und ein wieder lösen der Sicherungsklammer wegen der von der Sicherungsklammer aufzunehmenden Kräfte sehr schwierig und nur mit Werkzeugen zu bewerkstelligen ist.

Die DE 103 01 127 A1 offenbart ebenfalls eine Kupplungsvorrichtung, bei der jedoch als Verbindungselemente federelastisch vorgespannte in eine Nut verbringbare Sperrelemente vorgesehen sind. Nachteilig ist dabei, dass die Sperrelemente nur durch die Federwirkung des Halteelementes in die Nut verschiebbar sind. Eine Kontrolle, ob alle Sperrelemente tatsächlich in die Nut eingerastet sind, ist nicht gegeben.

Höchstdruckleitungen werden z.B. im Bergbau eingesetzt, wo die in den Muffen angeordneten Nute im rauen Betrieb leicht verschmutzen können. Derartig verschmutzte Nute sind nicht in der Lage die federbeaufschlagten Sperrelemente sicher aufzunehmen. Daher sind die Kupplungsvorrichtungen nach der DE 103 01 127 A1 z. B. für den Einsatz im Bergbau nicht geeignet.

Der Erfindung liegt daher die Aufgabe zugrunde, eine Kupplungsvorrichtung dahingehend weiterzubilden, dass dieser problemlos höchsten Drücken, auch bei rauem Betrieb standhält und dennoch leicht und vorzugsweise ohne Werkzeug zu verbinden bzw. zu lösen ist.

Zur Lösung der Aufgabe wird vorgeschlagen, dass dem Verbindungsstutzen ein fester Anschlag zugeordnet ist, dass auf dem Verbindungsstutzen eine verschiebebewegliche Verriegelungshülse angeordnet ist, dass zwischen Anschlag und Verriegelungshülse als Verbindungselement mindestens ein gezielt mechanisch antreibbares Rastelement vorgesehen ist, welches mit dem Anschlag und der Verriegelungshülse zusammenwirkt, dass bei in der Muffe eingeschobenem Verbindungsstutzen das Rastelement des Verbindungsstutzens einer Innenausnehmung der Muffe gegenübersteht, und dass das Rastelement durch Verschiebebewegung zwischen Verriegelungshülse und Anschlag aufeinander zu in die Innenausnehmung der Muffe einrastbar ist.

Hier wird die Scherkraft nicht mehr durch eine von außen einzusetzende Sicherungsklammer übernommen sondern durch ein dem Verbindungsstutzen zugeordnetes, nicht verlierbares Rastelement, welches sich großflächig sowohl am Verbindungsstutzen als auch an der Muffe abstützt.

Durch das gezielt mechanisch antreibbare Rastelement ist dieses kontrolliert in der Innenausnehmung einrastbar. Ist die Innenausnehmung z.B. verschmutzt, so kann das Rastelement nicht oder nicht vollständig in die Innenausnehmung eindringen. Das bewirkt aber auch, dass die Verschiebebewegung zwischen Verriegelungshülse und Anschlag nicht bis zum Ende durchgeführt werden kann. Damit wird ein Fehler in der Verriegelung signalisiert, bevor z.B. der volle Duck auf die Leitung gegeben wird, und diese durch die nicht vollständige Verriegelung ungewollt getrennt wird, wie es beim der Verriegelungsvorrichtung nach der DE 103 01 127 A1 passieren kann.

Es hat sich bewährt, dass die Innenausnehmung der Muffe von einer rechteckförmigen Nut gebildet wird und dass das Rastelement als rechteckförmiger spreizbarer Ring ausgeführt ist.

Der spreizbare Ring, der mit geringem Spiel in die rechteckigförmige Ringnut gespreizt werden kann übernimmt sowohl an den Nuträndern der ganzen Ringnut als auch an dem feststehenden umlaufenden Anschlag des Verbindungsstutzens großflächig Kräfte, so dass problemlos hohe Drücke gefahren werden können.

Vorzugsweise besteht der spreizbare Ring aus mindestens zwei Ringsegmenten, die über mindestens ein Federelement zusammen gehalten werden, wobei der Ring über mindestens einen Konus gespreizt werden kann.

Selbstverständlich können anstelle der ringförmigen Segmente auch Rollen oder sonstige Formelemente, die radial bewegt werden können und im Belastungsfall den Druck axial vom Verbindungsstutzen auf die Muffe übertragen können, eingesetzt werden. Die Federelemente dienen im Wesentlichen als Rückstellfeder, welche die Segmente, Rollen oder sonstigen Formelemente beim Endspreizen wieder in die Ausgangsstellung zurückbringen. Sie halten aber auch die Segmente, Rollen oder sonstige Formelemente derart zusammen, dass deren Ringform nicht verloren geht.

Bemerkenswert ist, dass der Konus am Verbindungsstutzen und/oder an den der Verriegelungshülse angebracht sein kann und dass das als Ring ausgebildete Rastelement durch Verschieben des Verbindungsstutzens und/oder der Verriegelungshülse spreizbar ist.

So kann vorzugsweise bei feststehendem Anschlag des Verbindungsstutzens die Verriegelungshülse auf den Ring bestehend aus Segmenten, Rollen oder sonstigen Formelementen zugeschoben werden, wobei sich dieser auf den Konus der Verriegelungshülse aufschiebt und dort weitet. Es besteht aber auch die Möglichkeit, dass bei feststehender Verriegelungshülse durch Ziehen an dem Verbindungsstutzen der Ring auf den Konus gezogen wird.

Es empfiehlt sich mindestens ein Sicherungselement, vorzugsweise eine Sicherungsklammer vorzusehen, die ein ungewolltes Verschieben des Konus und/oder des Anschlagelementes zu blockieren vermag.

Durch ein Spreizen des Rastelementes werden sämtliche Kräfte, auch die sehr hohen Kräfte bei höchsten Drücken, durch das Rastelement aufgenommen. Da das Rastelement durch Bewegung des Konus in einer Richtung gespreizt wird und durch Bewegung des Konus in der entgegengesetzten Richtung wieder entspreizt werden kann, empfiehlt es sich, ein ungewolltes Verschieben des Konus zu verhindern. Die Verbindungsvorrichtung ist bei gespreiztem Rastelement voll einsatzfähig. Im rauen Betrieb kann es jedoch eventuell zur ungewollten Verschiebung des entsprechenden Konus kommen. Dazu wird die Sicherungsklammer, die ein Verschieben des Konus verhindert, eingesetzt. Diese Sicherungsklammer muss jedoch im Gegensatz zum Stand der Technik keine vom hohen Druck bewirkten Kräfte mehr aufnehmen sondern lediglich verhindern, dass sich der Konus verschieben kann.

Von Vorteil ist, wenn mindestens ein Dichtungselement, vorzugsweise ein O-Ring, zwischen Verbindungsstutzen und Muffe und/oder zwischen Verbindungsstutzen und Verriegelungshülse und/oder zwischen Verriegelungshülse und Muffe vorgesehen ist.

Dabei dient das Dichtungselement zwischen Verbindungsstutzen und Muffe vorzugsweise als Hochdruckdichtung für das Druckmittel, vorzugsweise Hydraulikmedium, während die Dichtungselemente zwischen Verbindungsstutzen und Verriegelungshülse bzw. zwischen Verriegelungshülse und Muffe vorzugsweise dazu dienen, dass keine Verschmutzungen zum Rastelement gelangen können.

Die Erfindung wird anhand einer Zeichnung näher erläutert. Dabei zeigt:
- Figur 1: eine erfindungsgemäße Verbindungsvorrichtung, bei der das Rastelement durch Bewegung der Verriegelungshülse gespreizt wird und wo die Verschiebesicherung außerhalb der Muffe angeordnet ist,
- Figur 2: eine Kupplungsvorrichtung ähnlich wie in Figur 1, bei der jedoch die Verschiebesicherung innerhalb der Muffe angebracht wird,
- Figur 3: eine erfindungsgemäße Verbindungsvorrichtung, bei der durch Ziehen am Verbindungsstutzen das Rastelement gespreizt wird und bei der die Verschiebesicherung außerhalb der Muffe angeordnet ist und
- Figur 4: eine Kupplungsvorrichtung ähnlich der Figur 3, mit im Bereich der Muffe angebrachter Verschiebesicherung.

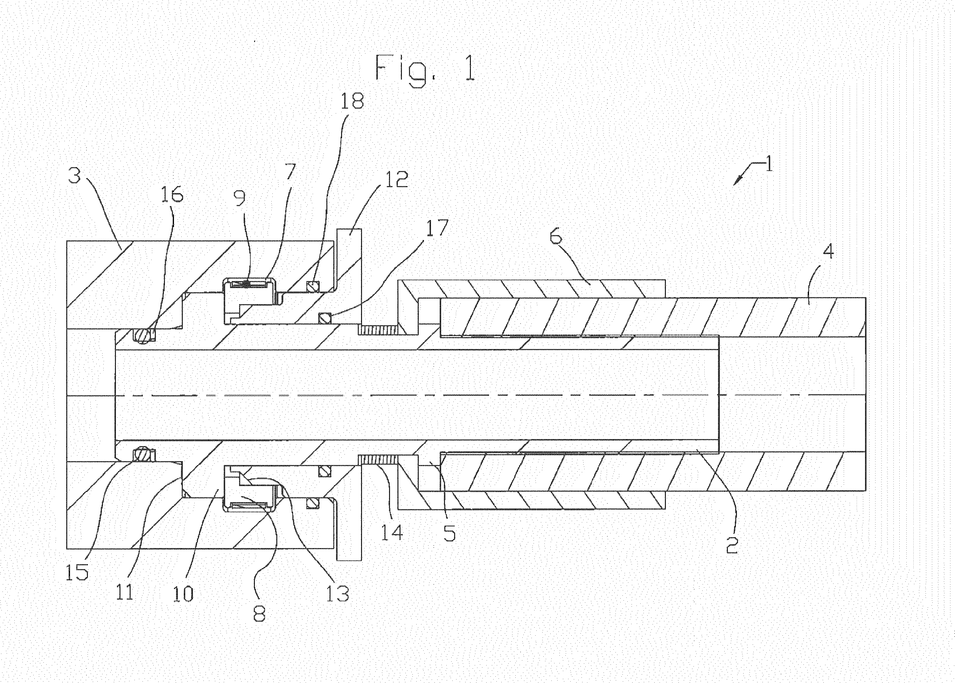

Figur 1 zeigt eine Verbindungsvorrichtung 1, bestehend aus einem Verbindungsstutzen 2, der in eine Muffe 3 einsteckbar ist. Am Verbindungsstutzen 2 ist ein Schlauch 4 gegen einen Anschlag 5 des Verbindungsstutzens 2 geschoben. Mittels einer Pressfassung 6 ist der Schlauch 4 auf dem Verbindungsstutzen 2 festgelegt. Die Muffe 3 weist eine rechteckförmige Innenausnehmung 7 in Form einer umlaufenden Nut auf, in welche Ringsegmente eines Rastelementes 8 eingerastet sind. Die Ringsegmente des Rastelements 8 werden über ein Federelement 9 zusammengehalten. Das Federelement 9 bewirkt auch ein Entspreizen des Rastelementes 8.

In Figur 1 wurde das Rastelement 8, nach dem der Verbindungsstutzen 2 mit dem auf diesem gelagerten Rastelement 8 mit seinem Anschlag 10 gegen eine Schulter 11 der Muffe 3 geschoben worden ist durch die Verriegelungshülse 12 in Richtung auf den Anschlag 10 geschoben. Der Konus 13 der Verriegelungshülse 12 hat dabei das Rastelement 8 gespreizt. In dieser Stellung können alle vom hohen zu verarbeitenden Druck auftretenden axial auf die Verbindungsvorrichtung wirkenden Kräfte von dem Anschlag 10 über das Rastelement 8 auf die Innenausnehmung 7 übertragen werden. Damit ist eine sichere Verbindung hergestellt. Das Rastelement kann großflächig die Kräfte übertragen.

Das Rastelement 8 wird erst wieder entspreizt, wenn die Verriegelungshülse 12 zurückgezogen wird. In diesem Falle würde das Federelement 9 die Ringsegmente des Rastelements 8 zusammenfahren. Das Rastelement 8 würde aus der Innenausnehmung 7 in radialer Richtung heraus gleiten und sich auf den Verbindungsstutzen 2 zusammenziehen.

Um ein ungewolltes Herausziehen der Verriegelungshülse 12 mit ihrem Konus 13 aus der Muffe 3 zu verhindern, ist eine Sicherungsklammer 14 vorgesehen, die sich in axiale Richtung über die Pressfassung an dem Anschlag 5 des Verbindungsstutzens 2 abstützt. Andererseits liegt die Sicherungsklammer 14 an der Verriegelungshülse 12 an, so dass diese erst wieder bewegt werden kann, wenn die Sicherungsklammer 14 vom Verbindungsstück 2 abgezogen worden ist.

Die Figur 1 zeigt weiterhin einen O-Ring 15, der sich über einen Stützring 16 in einer Nut am Verbindungsstutzen 2 abstützt. Der O-Ring 15 dient dazu, die Verbindungsvorrichtung 1 hochdruckseitig abzudichten.

Weiterhin sind O-Ring 17 und 18 als Dichtungen vorgesehen, um die Verriegelungshülse 12 gegenüber dem Verbindungsstutzen 2 und der Muffe 3 so abzudichten, dass kein Schmutz, auch bei rauem Betrieb, zu dem Rastelement 8 gelangen kann.

Die Muffe 3 steht dabei stellvertretend für eine Anschlussstelle eines Hydraulikbauteils oder aber auch für einen weiteren Schlauchanschluss.

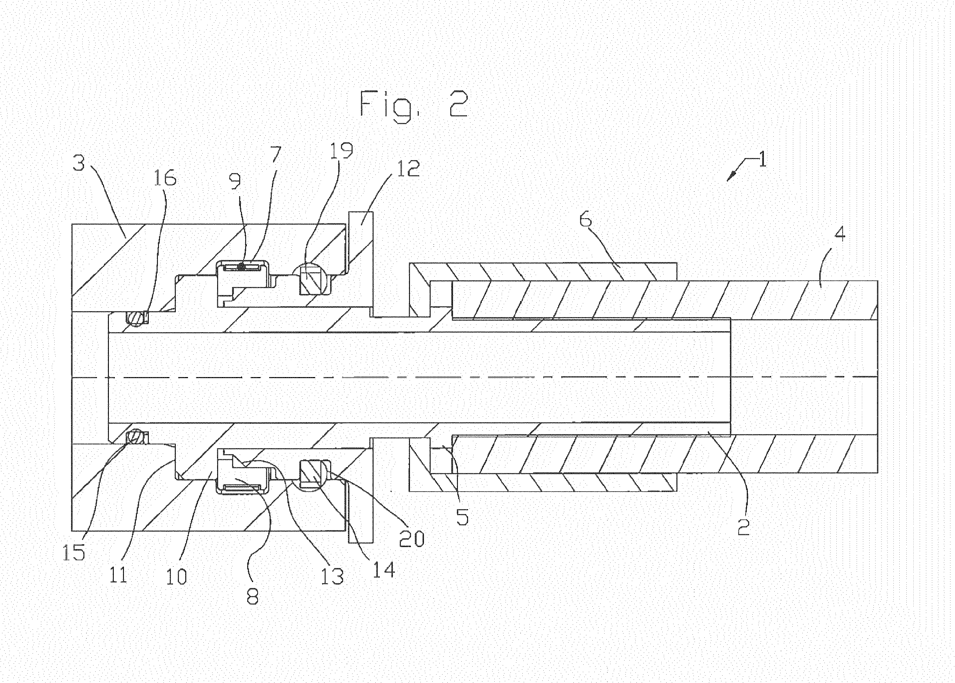

Die Figur 2 zeigt ebenfalls eine Verbindungsvorrichtung 1, bei der die gleichen Bauteile mit gleichen Bezugszeichen versehen sind. Die auch hier vorgesehenen O-Ringe 17 und 18 sind nicht dargestellt.

Die Verriegelungshülse 12 wird in diesem Ausführungsbeispiel durch eine Sicherungsklammer 14, die im Bereich der Muffe 3 angeordnet ist, gesichert. Dazu weist die Muffe 3 die Bohrung 19 auf, in welche die Sicherungsklammer 14 einsteckbar und in einer Nut 20 der Verriegelungshülse 12 halterbar ist.

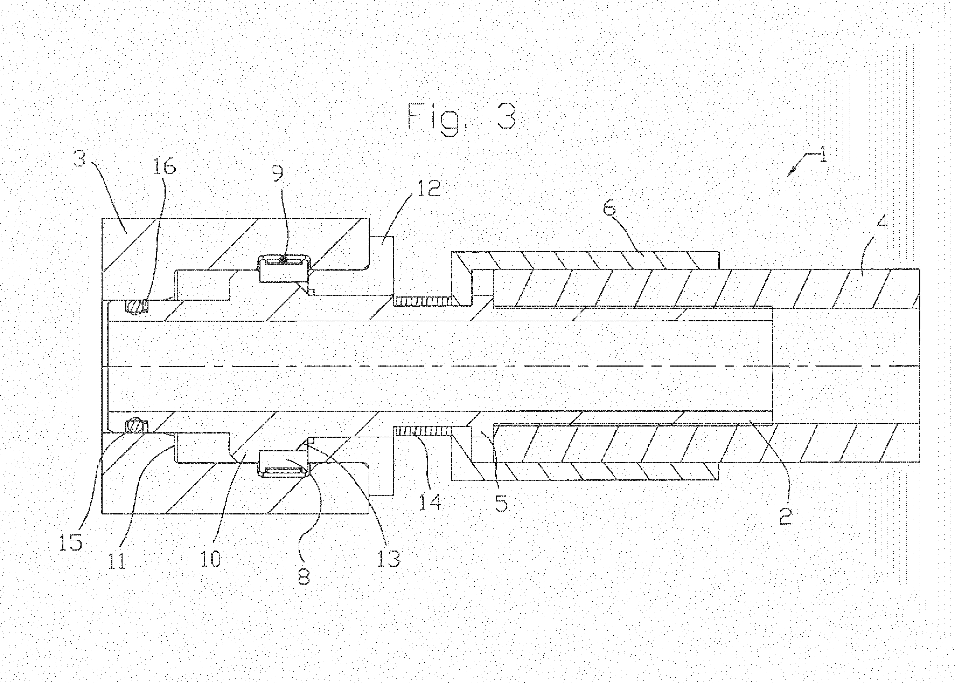

Auch im Ausführungsbeispiel nach Figur 3 sind gleiche Bauteile mit gleichen Bezugszeichen versehen. Hier weist jedoch anstelle der Verriegelungshülse 12 der Anschlag 10 des Verbindungsstutzens 2 den Konus 13 auf.

In diesem Ausführungsbeispiel wird das Spreizen des Rastelements 8 wie folgt bewirkt. Zunächst wird der Verbindungsstutzen 2, auf dem das Rastelement 8 in zusammengezogenem Zustand vor dem Konus 13 ruht mit seinem Anschlag 10 gegen die Schulter 11 der Muffe 3 geschoben. Anschließend wird die Verriegelungshülse 12 gegen die Muffe 3 verschoben und dort festgehalten. Wird nun zum Beispiel am Schlauch 4 und damit an dem Verbindungsstutzen 2 gezogen, fährt der Konus 13 unter das Rastelement 8, welches sich dabei spreizt und in die Innenausnehmung 7 der Muffe 3 eindringt.

Damit ist auch hier eine drucksichere, sämtliche axialen Kräfte aufnehmende Verbindung geschaffen. Damit der Verbindungsstutzen 2 mit dem Konus 13 nicht versehentlich wieder weiter in die Muffe 3 hineingeschoben werden kann, ist die Sicherungsklammer 14 zwischen der Pressfassung 6 und der Verriegelungshülse 12 vorgesehen. Erst nach Entfernen der Sicherungsklammer 14 vom Verbindungsstutzen 2 kann der Verbindungsstutzen 2 wieder weiter in die Muffe 3 geschoben und das Rastelement 8 auf dem Konus 13 nach unten gleiten und über das Federelement 9 zusammengezogen werden.

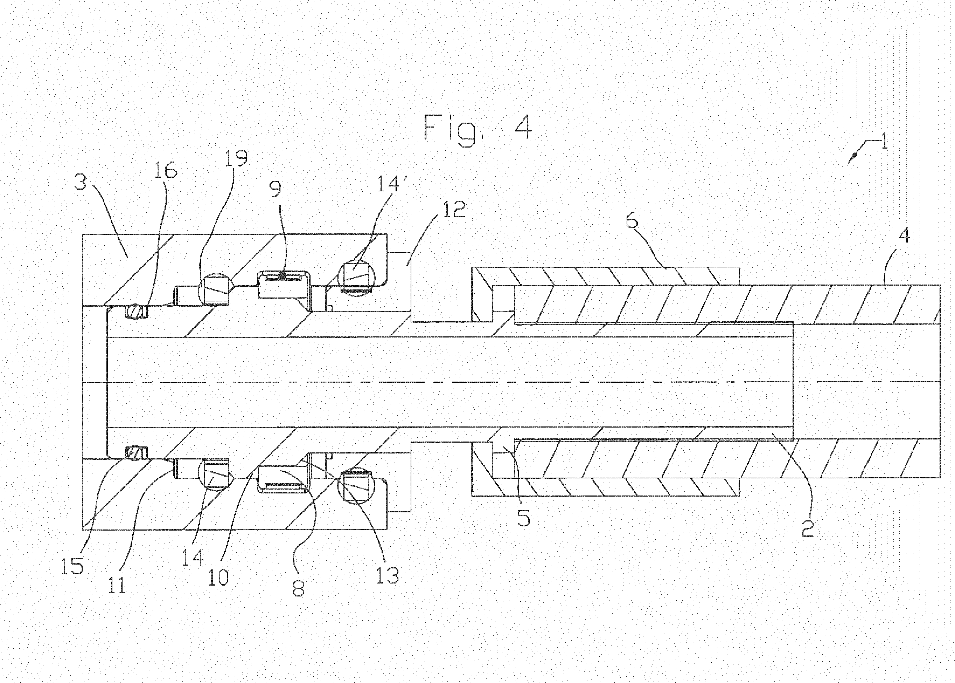

Figur 4 zeigt eine weitere Verbindungsvorrichtung 1, bei der, wie auch schon bei der Verbindungsvorrichtung nach Figur 3, durch Ziehen am Schlauch 4 bzw. Verbindungsstutzen 2 das Rastelement 8 gespreizt werden kann. Hier sorgt die innerhalb der Muffe wiederum über Bohrungen 19 eingesteckte Sicherungsklammer 14 dafür, dass der Verbindungsstutzen 2 nicht ungewollt weiter in die Muffe 3 geschoben werden kann.

Eine weitere Sicherungsklammer 14' dient dazu, dass sich die Verriegelungshülse 12 nicht ungewollt frei bewegen kann, was eventuell zu Verschmutzungen des Rastelementes 8 führen könnte, wenn die Verriegelungshülse 12 während des Betriebs ungewollt aus der Muffe 3 gezogen würde. Auch hier sind selbstverständlich nicht dargestellte O-Ringe vorgesehen, um eine Verschmutzung der Verbindungsvorrichtung 1 zu verhindern.

**Bezugszeichenliste**

| | |
|---|---|
| 1 | Verbindungsvorrichtung |
| 2 | Verbindungsstutzen |
| 3 | Muffe |
| 4 | Schlauch |
| 5 | Anschlag |
| 6 | Pressfassung |
| 7 | Innenausnehmung |
| 8 | Rastelement |
| 9 | Federelement |
| 10 | Anschlag |
| 11 | Schulter |
| 12 | Verriegelungshülse |
| 13 | Konus |
| 14 | Sicherungsklammer |
| 15 | O-Ring |
| 16 | Stützring |
| 17 | O-Ring |
| 18 | O-Ring |
| 19 | Bohrung |
| 20 | Nut |

## Patentansprüche

1. Kupplungsvorrichtung (1), bestehend aus einem Verbindungsstutzen (2), einer diesen aufnehmenden Muffe (3) sowie einem zwischen Verbindungsstutzen (2) und Muffe (3) wirkenden Verbindungselement zur lösbaren Verbindung mindestens einer Druckleitung, insbesondere Höchstdruckleitung mit einem Anschluss,
**dadurch gekennzeichnet,**
**dass** dem Verbindungsstutzen (2) ein fester Anschlag (10) zugeordnet ist, dass auf dem Verbindungsstutzen (2) eine verschiebebewegliche Verriegelungshülse (12) angeordnet ist, dass zwischen Anschlag (10) und Verriegelungshülse (12) als Verbindungselement mindestens ein gezielt mechanisch antreibbares Rastelement (8) vorgesehen ist, welches mit dem Anschlag (10) und der Verriegelungshülse (12) zusammenwirkt, dass bei in der Muffe (3) eingeschobenem Verbindungsstutzen (2) das Rastelement (8) des Verbindungsstutzens (2) einer Innenausnehmung (7) der Muffe (3) gegenübersteht, und dass das Rastelement (8) durch Verschiebebewegung zwischen Verriegelungshülse (12) und Anschlag (10) aufeinander zu in die Innenausnehmung (7) der Muffe (3) einrastbar ist.

2. Verbindungsvorrichtung (1) nach Anspruch 1,
**dadurch gekennzeichnet,**
**dass** die Innenausnehmung (7) der Muffe (3) von einer Ringnut, vorzugsweise rechteckförmigen Ringnut gebildet wird, und dass das Rastelement (8) als spreizbarer Ring, vorzugsweise rechteckförmiger spreizbarer Ring ausgeführt ist.

3. Verbindungsvorrichtung (1) nach Anspruch 2,
**dadurch gekennzeichnet,**
**dass** der spreizbare Ring aus mindestens zwei Ringsegmenten besteht, die von mindestens einem Federelement (9) umschlungen sind, und dass die Ringsegmente über mindestens einen Konus (13) gegen die Kraft des Federelements (9) spreizbar sind.

4. Verbindungsvorrichtung (1) nach Anspruch 3,
**dadurch gekennzeichnet,**
**dass** der Konus (13) am Verbindungsstutzen (2) und/oder an dem Anschlagelement (12) angeordnet ist und dass das Rastelement (8) durch Verschieben des Verbindungsstutzens (2) und/oder der Verriegelungshülse (12) spreizbar ist.

5. Verbindungsvorrichtung (1) nach Anspruch 3 oder 4,
**dadurch gekennzeichnet,**
**dass** mindestens ein Sicherungselement, vorzugsweise eine Sicherungsklammer (14, 14') vorgesehen ist, die ein ungewolltes Verschieben des Konus (13) und ggf. der Verriegelungshülse (12) zu blockieren vermag.

6. Verbindungsvorrichtung (1) nach einem der Ansprüche 1 bis 5,
**dadurch gekennzeichnet,**
**dass** mindestens ein Dichtungselement, vorzugsweise O-Ringe (15, 17, 18) zwischen Verbindungsstutzen (2) und Muffe (3) und/oder zwischen Verbindungsstutzen (2) und Verriegelungshülse (12) und/oder zwischen Verriegelungshülse (12) und Muffe (3) vorgesehen ist.
